# DEMANDE DE BREVET EUROPEEN

(11) **EP 1 873 547 A1**
(43) Date de publication de la demande: **02.01.2008**
(21) Numéro de dépôt: 07110862.5
(22) Date de dépôt: 22.06.2007
(51) Int. Cl.: G01S 1/00, G01S 5/14

(54) **Procédé et dispositif de localisation**

(30) Priorité: 29.06.2006 FR 0652696
(71) Demandeur: Alcatel Lucent, 75008 Paris (FR)
(72) Inventeur: Dominguez, Virginie, 31170 Tournefeuille (FR); Terrenoir, Stéphane, 31037 Toulouse Cedex 01 (FR); Monnerat, Michel, 31240 L'Union (FR); Corazza, Stéphane, 31037 Toulouse Cedex 01 (FR)
(74) Mandataire: Hedarchet, Stéphane

(57) **Abrégé**

Procédé de localisation d'un récepteur (1) pour système de positionnement par satellite, qui comprend les étapes consistant à :
- Obtenir un modèle de navigation, une estimation initiale de la position du récepteur et une estimation initiale du temps système,
- Vérifier si au moins cinq signaux satellites individuels sont reçus une puissance de réception suffisante et, dans l'affirmative, exécuter une boucle de calcul itérative comprenant les étapes consistant à :
o Déterminer une estimation de la position du récepteur et du temps système en fonction d'une hypothèse sur le temps système, et
o Calculer une grandeur de sélection (R) en fonction de ladite estimation de la position du récepteur et du temps système,

- Sélectionner la valeur de l'estimation de la position du récepteur pour laquelle ladite grandeur de sélection vérifie une condition de sélection.

## Description

La présente invention se rapporte à un procédé de localisation d'un récepteur d'un système de positionnement par satellite, et à un dispositif pour la mise en oeuvre du procédé.

Dans le cadre d'un système de positionnement par satellite, tels que par exemple les systèmes GPS ou Galileo, on connaît un procédé de localisation dans lequel un récepteur communique avec un serveur de localisation par l'intermédiaire d'un réseau de télécommunication, par exemple un réseau de téléphonie cellulaire.

Dans ce procédé, le récepteur peut obtenir un modèle de navigation, c'est-à-dire des informations permettant de déterminer les positions des satellites en fonction du temps système, ainsi qu'une estimation de sa position et du temps système, en provenance du serveur de localisation.

A partir de ces informations et des signaux satellites reçus, le récepteur calcule sa position et le temps système. Plus précisément, comme expliqué dans le document US-2003/0025632-A1, la position du récepteur et le temps système sont déterminés grâce à un vecteur X = (Δx, Δy, Δz, Δcb)^{T} , qui représente d'une part l'écart entre la position du récepteur représentée par les coordonnées x, y, z et l'estimation initiale de cette position, et d'autre part l'écart entre le décalage d'horloge du récepteur cb, et l'estimation initiale de ce décalage d'horloge.

Le récepteur détermine un vecteur X*, par exemple par une méthode d'estimation par les moindres carrés, qui est une estimation de la solution de l'équation Z = H . X. Dans cette équation, le vecteur Z est appelé vecteur résiduel des pseudo-distances, et la matrice H est appelée matrice d'observation. Les expressions de Z et H sont connues de l'homme du métier, par exemple du document précité, et ne seront pas décrites en détail ici. On rappelle simplement qu'elles peuvent être calculées à partir du modèle de navigation, d'une estimation de la position du récepteur et du temps système, et d'un décalage temporel entre les signaux satellites reçu en provenance d'au moins quatre satellites. Le décalage temporel peut être déterminé à partir d'un décalage entre les différentes séquences pseudo-aléatoires avec lesquelles sont codés les messages transmis par les satellites.

Le récepteur calcule ensuite un résidu R = | H . X* - Z | et, si ce résidu R est inférieur à un seuil donné, le vecteur X* est validé comme solution et permet de déterminer la position du récepteur et le temps système.

Dans un procédé alternatif, le récepteur communique au serveur de localisation les informations nécessaires pour que le serveur effectue lui-même le calcul du vecteur X* et du résidu R. Dans ce cas, il n'est pas nécessaire que le récepteur dispose de moyens de calcul aptes à effectuer ce calcul.

Le procédé qui vient d'être décrit présente plusieurs inconvénients. Il est possible que le procédé donne une solution qui présente une erreur inacceptable sur la position du récepteur, bien que le résidu R soit inférieur au seuil donné. Cela peut être le cas notamment quand un ou plusieurs signaux satellites sont reçus avec une puissance insuffisante, ce qui résulte en une matrice Z erronée. Cela peut aussi être le cas quand l'estimation initiale du temps système est trop éloignée du temps système réel.

Pour s'affranchir de l'erreur trop importante sur l'estimation initiale du temps système, il est connu, notamment du document US-2005/0174284-A1, de déterminer le temps système en lisant des informations de synchronisation dans les messages satellites. Dans le système GPS, cette information de synchronisation est appelée TOW (Time of week), et n'est transmise qu'une fois toutes les 6 secondes pendant 1,2 seconde. Le temps nécessaire pour obtenir cette information est donc long, en moyenne de 4,2 secondes et jusqu'à 7,2 secondes. Il n'est donc pas possible de localiser le récepteur rapidement.

L'invention a pour but de fournir un procédé qui ne présente pas au moins certains des inconvénients précités de l'art antérieur.

Pour cela, l'invention fournit un procédé de localisation d'un récepteur pour système de positionnement par satellite, caractérisé par le fait qu'il comprend les étapes consistant à :
- Obtenir un modèle de navigation, une estimation initiale de la position du récepteur et une estimation initiale du temps système,
- Vérifier si au moins cinq signaux satellites individuels sont reçus par ledit récepteur avec une puissance de réception supérieure à un seuil de puissance et, dans l'affirmative, exécuter une boucle de calcul itérative jusqu'à la vérification d'une condition de sortie, ladite boucle de calcul itérative comprenant les étapes consistant à :
   o Déterminer une estimation de la position du récepteur et du temps système en fonction dudit modèle de navigation, desdits au moins cinq signaux satellites, d'une estimation antérieure de la position du récepteur et d'une hypothèse sur le temps système, et
   o Calculer une grandeur de sélection en fonction de ladite estimation de la position du récepteur et de ladite hypothèse sur le temps système,
- Sélectionner comme position du récepteur la valeur de l'estimation de la position du récepteur pour laquelle ladite grandeur de sélection vérifie une condition de sélection.

Grâce à ces caractéristiques, il n'est pas nécessaire de lire une information de synchronisation dans les messages transmis par les satellites, qui n'est transmise que périodiquement avec une période importante. On peut donc localiser le récepteur rapidement. De plus, comme on détermine plusieurs estimations de la position du récepteur dans la boucle de calcul en fonction de plusieurs hypothèses sur le temps système, et qu'on sélectionne une des estimations de la position pour laquelle une condition de sélection est vérifiée, la probabilité de fournir une solution pour laquelle la position du récepteur présente une erreur inacceptable est fortement réduite. Cette probabilité est également réduite par le fait de vérifier qu'au moins cinq signaux satellites individuels sont reçus avec une puissance de réception suffisante.

De préférence, ladite condition de sélection comprend le fait que l'estimation de la position du récepteur correspond à la grandeur de sélection qui est minimale. Avantageusement, ladite condition de sélection comprend le fait que la grandeur de sélection est inférieure à un seuil d'erreur.

De préférence, dans l'étape de détermination d'une estimation, ladite estimation antérieure est ladite estimation initiale.

Selon un mode de réalisation particulier, l'étape de vérification comprend les étapes consistant à :
- Additionner des codes pseudo-aléatoires modulés correspondant aux satellites au-dessus de l'horizon,
- Corréler la somme ainsi obtenue avec un signal satellite total reçu en bande de base, afin d'obtenir un signal de corrélation,
- Compter le nombre de maxima locaux dudit signal de corrélation qui sont supérieurs à un seuil de réception.

Cela permet d'effectuer la vérification rapidement avec des ressources limitées, car seule une opération de corrélation est nécessaire.

Avantageusement, ladite boucle itérative met en oeuvre la méthode de la sélection dorée pour recherche ladite grandeur de sélection minimale.

L'invention fournit également un dispositif de localisation d'un récepteur pour système de positionnement par satellite, caractérisé par le fait qu'il comprend des moyens de traitement aptes à mettre en oeuvre le procédé selon l'invention ci-dessus.

Le dispositif de localisation peut être par exemple le récepteur lui-même, ou un serveur de localisation avec lequel le récepteur communique.

L'invention fournit également un moyen de stockage dans lequel est stocké un logiciel, caractérisé par le fait que ledit logiciel comprend des instructions adaptées pour mettre en oeuvre le procédé selon l'invention ci-dessus quand il est exécuté sur un dispositif programmable.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1 est une représentation schématique de différents éléments d'un système de positionnement par satellite,
- la figure 2 est une représentation des étapes de calcul effectuées pour déterminer un signal de corrélation, selon un mode de réalisation de l'invention,
- la figure 3 est un graphe d'un exemple de signal de corrélation obtenu selon les étapes de la figure 2,
- la figure 4 est un graphe représentant la relation entre le résidu R et l'hypothèse t_{hyp} sur le TOW, dans un procédé selon un mode de réalisation de l'invention.

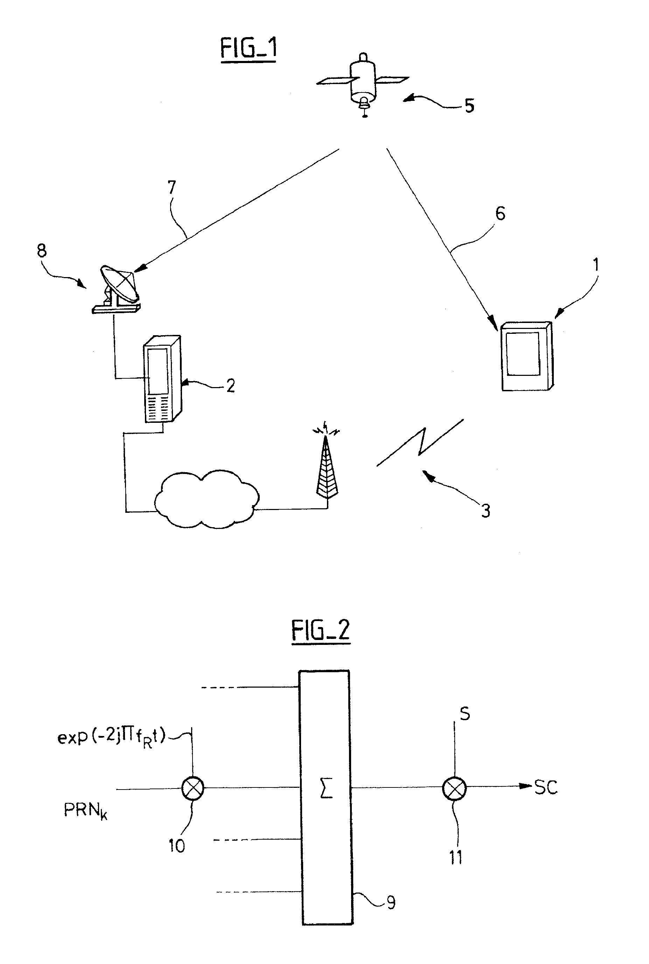

Sur la figure 1, on a représenté un récepteur 1. Le récepteur 1 est apte à communiquer avec un serveur de localisation 2 par l'intermédiaire d'un réseau de téléphonie cellulaire 3. Le récepteur 1 est également apte à capter des signaux satellites provenant d'une pluralité de satellites 5, comme le représente la flèche 6. Sur la figure 1, on a représenté seulement un satellite 5.

Le serveur de localisation 2 est relié à une antenne de réception 8, qui lui permet également de capter les signaux satellites provenant des satellites 5, comme le représente la flèche 7. Les signaux satellites incluent des messages satellites qui comprennent des informations permettant au serveur de localisation 2 d'obtenir un modèle de navigation, c'est-à-dire un ensemble d'informations permettant de connaître les positions des satellites 5 pour un temps système donné.

Le récepteur 1 est apte à obtenir une estimation initiale de sa position Xᵢₙᵢₜ, yᵢₙᵢₜ, Zᵢₙᵢₜ, et du temps système tᵢₙᵢₜ. Cette estimation initiale lui est transmise par le serveur de localisation 2. L'estimation du temps système tᵢₙᵢₜ peut présenter une erreur comprise entre -3 et +3 seconde. Le serveur de localisation 2 transmet également le modèle de navigation au récepteur 1.

Pour déterminer sa position et le temps système, le récepteur 1 met en oeuvre le procédé décrit ci-dessous.

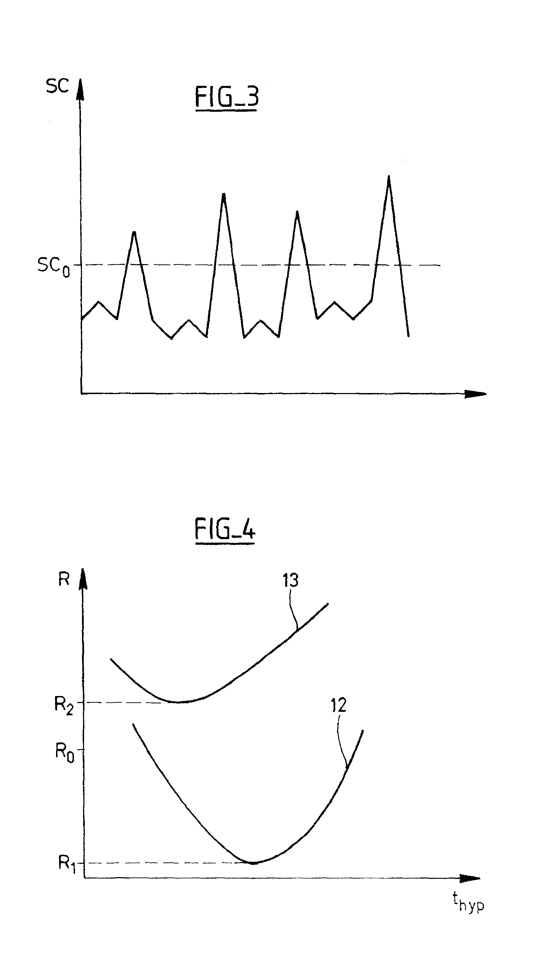

Tout d'abord, le récepteur 1 vérifie qu'il reçoit au moins cinq signaux satellites en provenance d'au moins cinq satellites 5 différents, avec une puissance de réception suffisante. Les figures 2 et 3 illustrent un exemple d'étapes convenant pour cette vérification. Bien entendu, cette vérification pourrait être effectuée autrement.

On sait que chaque message satellite émis par un satellite 5 est codé par un code pseudo-aléatoire PRN. Pour chaque satellite 5 au-dessus de l'horizon, d'indice k, le code pseudo-aléatoire correspondant PRNₖ est modulé en fréquence par une porteuse d'expression exp(-2jπfₖt), où fₖ est la fréquence supposée de réception du signal provenant du satellite 5 d'indice k. La détermination de fₖ en fonction du modèle de navigation et de l'estimation initiale de la position du récepteur xᵢₙᵢₜ, yᵢₙᵢₜ, zᵢₙᵢₜ et du temps système tᵢₙᵢₜ est une opération connue de l'homme du métier et n'est pas décrite en détail ici. Sur la figure 2, cette modulation est représentée par un opérateur de modulation 10.

Les codes pseudo-aléatoires modulés ainsi obtenus sont additionnés, comme le représente l'additionneur 9. La somme obtenue est alors corrélée avec un signal S, comme le représente l'opérateur de corrélation 11, qui fournit un signal de corrélation SC. Le signal S correspond à une période déterminée, par exemple de 20ms, du signal satellite total reçu, en bande de base. Par signal satellite total reçu, on entend le signal électromagnétique correspondant à l'ensemble des signaux satellites individuels émis par les satellites 5, qui est reçu par le récepteur 1.

La figure 3 représente un exemple du signal de corrélation SC. En comptant le nombre de maxima locaux du signal de corrélation SC, qui sont supérieurs à un seuil de réception SC₀, on peut déterminer le nombre de signaux satellites individuels reçus avec une puissance suffisante. Si ce nombre est supérieur ou égal à cinq, le récepteur 1 peut déterminer sa position de la manière décrite ci-dessous. Le seuil de réception SC₀ est un seuil prédéterminé, en fonction d'une probabilité d'erreur acceptée.

Pour déterminer sa position et le temps système, le récepteur 1 exécute une boucle de calcul itérative afin de mettre en oeuvre une méthode de recherche.

Dans la boucle, un vecteur X* et un résidu R sont déterminés de manière similaire à ce qui est décrit ci-dessus, en fonction du modèle de navigation, d'une estimation antérieure de la position du récepteur, d'une hypothèse courante t_{hyp} sur le temps système, et des signaux satellites reçus.

Différentes méthodes de recherche numériques peuvent être utilisées pour exécuter la boucle. Dans le mode de réalisation décrit, les étapes de la boucle sont effectuées pour chaque valeur du temps système comprise dans un intervalle qui va de 3 secondes avant à trois secondes après l'estimation initiale du temps système, par pas de 1 ms. Ensuite, on sélectionne le vecteur X* qui correspond au résidu R minimum.

Au cours de la première itération de la boucle, l'estimation antérieure de la position du récepteur est l'estimation initiale fournie par le serveur de localisation 2. Au cours d'une itération ultérieure, l'estimation antérieure de la position du récepteur peut être de nouveau l'estimation initiale, ou être la position déterminée lors d'une itération antérieure, correspondant au résidu R minimum parmi les résidus R déjà calculés.

Ensuite, le résidu R minimum est comparé à un seuil d'erreur R₀. S'il est inférieur au seuil R₀, le vecteur X* est validé comme solution. Le récepteur 1 connaît alors sa position et le temps système.

La figure 4 représente, pour deux exemples donnés, la relation entre le résidu R et l'hypothèse sur le temps système t_{hyp}. La courbe 12 présente un résidu minimum R₁ qui est inférieur au seuil R₀. Le vecteur X* correspondant sera donc retenu comme solution. La courbe 13 représente cette relation dans le cas ou le récepteur 1 a effectivement vérifié qu'il reçoit au moins cinq signaux satellites avec une puissance suffisante, mais qu'il subsiste malgré cela des erreurs de mesure. Dans ce cas, comme la courbe 13 présente un résidu minimum R₂ qui est supérieur au seuil R₀, le vecteur X* correspondant ne sera pas retenu comme solution.

D'autres méthodes de recherche numériques, qui présentent une meilleure efficacité que celle décrite ci-dessus, peuvent être utilisées. On peut par exemple effectuer une recherche par dichotomie, par la méthode de Newton,... Ces méthodes numériques sont connues de l'homme du métier et leur application à la recherche d'un vecteur X* correspondant à un résidu R minimum ne nécessite pas d'explication supplémentaire pour l'homme du métier. Dans une variante avantageuse, la méthode utilisée est la méthode dite de la sélection dorée (« Golden sélection search), décrite dans *« Numerical Recipes in C* », Second Edition, Cambridge University press, 1992, section 15.5, page 687. Cette méthode présente les avantages (i) de converger plus rapidement qu'une méthode systématique, (ii) de converger avec une rapidité déterministe, permettant de prévoir la charge de calcul associée, et (iii) ne nécessite pas la connaissance de la dérivée partielle de la valeur à minimiser, le résidu R dans le cas présent.

Le calcul effectué par le récepteur 1 peut être effectué très rapidement. En particulier, il n'est pas nécessaire d'attendre que le temps système soit transmis dans les messages satellites. Il suffit de mesurer un décalage temporel entre l'instant de réception des différents signaux satellites, ce qui peut se faire rapidement en déterminant un décalage entre les séquences de codes pseudo-aléatoires. Ainsi, les inventeurs ont constaté qu'il était possible pour un récepteur selon un mode de réalisation de l'invention de déterminer sa position en un temps inférieur à 0,5 s.

Pour exécuter les différentes étapes décrites ci-dessus, le récepteur 1 comprend des moyens de traitement qui peuvent comprendre par exemple un microprocesseur générique et un logiciel spécifique, un circuit électronique spécifique ou une combinaison des deux.

Dans un mode de réalisation alternatif, au moins une partie des étapes de calcul décrites ci-dessus sont effectuées par le serveur de localisation 2. Par exemple, le récepteur 1 envoie au serveur de localisation une information de vérification lui indiquant s'il reçoit au moins cinq signaux satellites avec une puissance suffisante, ainsi que les décalages temporels entre les instants de réceptions de ces signaux satellites. Si l'information de vérification est positive, le serveur de localisation 2 exécute la boucle de calcul itérative et détermine la position du récepteur 1 et le temps système. Le serveur de localisation 2 peut alors communiquer ces informations au récepteur 1.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé de localisation d'un récepteur (1) pour système de positionnement par satellite, **caractérisé par le fait qu'**il comprend les étapes consistant à :
- Obtenir un modèle de navigation, une estimation initiale de la position du récepteur et une estimation initiale du temps système,
- Vérifier si au moins cinq signaux satellites individuels sont reçus par ledit récepteur avec une puissance de réception supérieure à un seuil de puissance et, dans l'affirmative, exécuter une boucle de calcul itérative jusqu'à la vérification d'une condition de sortie, ladite boucle de calcul itérative comprenant les étapes consistant à :
o Déterminer une estimation de la position du récepteur et du temps système en fonction dudit modèle de navigation, desdits au moins cinq signaux satellites, d'une estimation antérieure de la position du récepteur et d'une hypothèse sur le temps système (t_{hyp}), et
o Calculer une grandeur de sélection (R) en fonction de ladite estimation de la position du récepteur et de ladite hypothèse sur le temps système,
- Sélectionner comme position du récepteur la valeur de l'estimation de la position du récepteur pour laquelle ladite grandeur de sélection vérifie une condition de sélection.

2. Procédé selon la revendication 1, dans lequel ladite condition de sélection comprend le fait que l'estimation de la position du récepteur correspond à la grandeur de sélection qui est minimale (R₁).

3. Procédé selon la revendication 2, dans lequel ladite condition de sélection comprend le fait que la grandeur de sélection est inférieure à un seuil d'erreur (R₀).

4. Procédé selon l'une des revendications 1 à 3, dans lequel dans l'étape de détermination d'une estimation, ladite estimation antérieure est ladite estimation initiale.

5. Procédé selon l'une des revendications 1 à 4, dans lequel l'étape de vérification comprend les étapes consistant à :
- Additionner des codes pseudo-aléatoires (PRNₖ) modulés correspondant aux satellites au-dessus de l'horizon,
- Corréler la somme ainsi obtenue avec un signal satellite total reçu en bande de base (S), afin d'obtenir un signal de corrélation (SC),
- Compter le nombre de maxima locaux dudit signal de corrélation qui sont supérieurs à un seuil de réception (SC₀).

6. Procédé selon l'une des revendications 2 à 5, dans lequel ladite boucle itérative met en oeuvre la méthode de la sélection dorée pour recherche ladite grandeur de sélection minimale.

7. Dispositif de localisation (1, 2) d'un récepteur pour système de positionnement par satellite, **caractérisé par le fait qu'**il comprend des moyens de traitement aptes à mettre en oeuvre le procédé selon l'une des revendications 1 à 6.

8. Moyen de stockage dans lequel est stocké un logiciel, **caractérisé par le fait que** ledit logiciel comprend des instructions adaptées pour mettre en oeuvre le procédé selon l'une des revendications 1 à 6 quand il est exécuté sur un dispositif programmable.
